# EUROPEAN PATENT APPLICATION

(11) **EP 2 105 314 A1**
(43) Date of publication of application: **30.09.2009**
(21) Application number: 09154930.3
(22) Date of filing: 11.03.2009
(51) Int. Cl.: B41J 11/70, B26D 1/38, B26D 5/20

(54) **Image forming apparatus**

(30) Priority: 25.03.2008 JP 2008077670
(71) Applicant: Noritsu Koki Co., Ltd, Wakayama-shi, Wakayama 640-8550 (JP)
(72) Inventor: Yamamoto, Akihito, WAKAYAMA 640-8550 (JP)
(74) Representative: Delorme, Nicolas

(57) **Abstract**

Printing paper (P1, P2) is cut by moving the lower one (52) of a pair of upper and lower cutting blades with the upper one (51) fixed. A protective member (53) for preventing the printed surface of the printing paper (P1, P2) being conveyed from coming into contact with the cutting edge of the upper cutting blade (51) is disposed upstream of the upper cutting blade (51) in the direction of paper conveyance.

## Description

### BACKGROUND

This invention relates to image forming apparatuses.

In conventional image forming apparatuses used such as for photographic printing systems, their printer body includes a paper containing chamber for containing a long web of rolled paper (a long rolled paper web). The paper web contained in the paper containing chamber is fed to a printing part and printed therein by a print head, such as an inkjet print head. The printed paper web is cut to a given length by a cutter unit and then conveyed to an output point at which, for example, a paper output tray is disposed. In this case, a chip of the paper cut by the cutter unit is recovered in a chip collecting box (see Published Japanese Patent Application No. 2007-261038).

Although Published Japanese Patent Application No. 2007-261038 discloses, as a cutter unit for cutting paper, a rotary cutter for cutting paper by moving its circular blade from one width edge to the other width edge of the paper while rotating the circular blade, a so-called guillotine cutter is also known as another form of cutter unit in the art. The guillotine cutter has upper and lower cutting blades disposed above and below the paper, respectively, and is configured to cut the paper by a shearing force by pressing the upper cutting blade against the paper with the lower cutting blade fixed.

### SUMMARY OF THE DISCLOSURE

However, if a guillotine cutter is used as the cutter unit of such a conventional image forming apparatus, this causes a problem that, for a long piece of paper on which a plurality of images are formed, a margin thereof at the rear end of the final image cannot be cut off.

Specifically, when a margin of the paper is cut off by pressing the upper cutting blade against the paper, a paper chip may rest at one end on a guide plate disposed at a point on a paper conveyance path located upstream of the cutter unit in the direction of paper conveyance and at the other end on the cutting edge of the lower cutting blade. Thereby, the paper chip is left on the conveyance path without being recovered in the chip collecting box. In this case, even if the chip is left on the conveyance path, so long as it is a margin at the leading end of the paper or a margin between adjacent images, it is pushed out by the paper being sequentially conveyed and thereby falls into the chip collecting box. This is not particularly a problem.

However, if a margin at the rear end of the final image formed on the paper is left on the conveyance path, there exists no paper to be next conveyed and, therefore, the chip is kept on the conveyance path without being pushed out and falling into the chip collecting box, which is undesirable. For this reason, a margin at the rear end of the final image must be output from the apparatus, without being cut off by the cutter unit, and then cut off manually. This deteriorates the working efficiency.

In addition, in the case of using a guillotine cutter as the cutter unit, if the paper is curled upward, the printed surface of the paper being conveyed may be slid against the cutting edge of the upper cutting blade and thereby get scratched.

The present invention has been made in view of the foregoing points and, therefore, an object thereof is that an image forming apparatus including a cutter unit with a pair of upper and lower cutting blades can cut off a paper margin at the rear end of the final one of a plurality of images formed on the paper and surely recover it in a chip collecting box, and also can prevent a printed surface of the paper being conveyed from coming into contact with the upper cutting blade and thereby getting scratched.

To attain the above object, out of the pair of upper and lower cutting blades, the lower cutting blade is moved upward to cut the paper, and a protective member for preventing the printed surface of the paper being conveyed from coming into contact with the cutting edge of the upper cutting blade is disposed upstream of the upper cutting blade in the direction of paper conveyance.

Specifically, what is targeted is an image forming apparatus for forming images on a long piece of paper while conveying the paper in a predetermined direction of paper conveyance, then cutting the paper having the images formed thereon to a given length and conveying the paper to a predetermined point, and the following solutions are taken.

Specifically, in a first aspect of the invention, the image forming apparatus includes: a cutting unit including an upper cutting blade and a lower cutting blade that are disposed above and below the paper, respectively, the cutting unit being configured to cut the paper by moving the lower cutting blade upward with the upper cutting blade fixed; and a protective member disposed upstream of the upper cutting blade in the direction of paper conveyance to overlap with the cutting edge of the upper cutting blade when viewed along the direction of paper conveyance, the protective member being configured to prevent the printed surface of the paper being conveyed from coming into contact with the cutting edge of the upper cutting blade.

According to the first aspect of the invention, since the upper and lower cutting blades are disposed above and below the paper, respectively, and the paper is cut by moving the lower cutting blade upward with the upper cutting blade fixed, it can be avoided that when a margin of the paper at the rear end of the final one of a plurality of images formed on the paper is cut off, the paper chip is left on the conveyance path.

To be specific, in the known cutting unit in which the upper cutting blade is moved downward with the lower cutting blade fixed, a paper chip may rest at one end on a guide plate disposed at a point on the paper conveyance path located upstream of the cutter unit in the direction of paper conveyance and at the other end on the cutting edge of the lower cutting blade. Thereby, the paper chip is left on the conveyance path without being recovered in the chip collecting box.

In contrast, according to the above aspect of the invention, since the lower cutting blade is moved up and down, a paper chip resting on top of the cutting edge of the lower cutting blade is tilted and slides down according to the downward movement of the lower cutting blade. Therefore, the chip can be surely let fall into the chip collecting box disposed below the cutting unit.

Furthermore, the protective member is disposed upstream of the upper cutting blade in the direction of paper conveyance to overlap with the cutting edge of the upper cutting blade when viewed along the direction of paper conveyance. This prevents the printed surface of the paper being conveyed from coming into contact with the cutting edge of the upper cutting blade.

To be specific, in the cutting unit in which the lower cutting blade is moved upward with the upper cutting blade fixed, the distance between the printed surface of the paper and the cutting edge of the upper cutting blade must be narrow to a certain extent in order to provide a desired shearing force. However, for example, if the paper is curled upward, the printed surface of the paper being conveyed may be slid against the cutting edge of the upper cutting blade and thereby get scratched.

To cope with this, in the above aspect of the invention, the protective member prevents the printed surface of the paper being conveyed from coming into contact with the cutting edge of the upper cutting blade. This avoids the printed surface being slid against the cutting edge and getting scratched, which is advantageous in ensuring the product quality.

A second aspect of the invention is the image forming apparatus according to the first aspect of the invention, wherein a closure member is disposed above the lower cutting blade and configured to prevent flying-off of a paper chip thrust upward by the lower cutting blade upon cutting of the paper.

According to the second aspect of the invention, since the closure member for preventing flying-off of the chip thrust upward by the lower cutting blade upon cutting of the paper is disposed above the lower cutting blade, this prevents the chip flying off upward from being irrecoverable and clogging the conveyance path.

A third aspect of the invention is the image forming apparatus according to the first aspect of the invention, wherein the cutting edge of the upper cutting blade is positioned close to the printed surface of the paper and constitutes a stop for stopping the paper from being lifted up by the lower cutting blade upon cutting of the paper.

In the third aspect of the invention, the cutting edge of the upper cutting blade is positioned close to the printed surface of the paper and the cutting edge constitutes a stop for stopping the paper from being lifted up by the lower cutting blade upon cutting of the paper. Thus, even if, upon cutting the paper by moving the lower cutting blade upward, the paper is lifted up with the movement of the lower cutting blade, the upper cutting blade can stop further upward movement of the paper. Therefore, the paper can be smoothly cut. Furthermore, since there is no need to additionally provide a stop for preventing the paper from being lifted up, this is advantageous in cost reduction.

A fourth aspect of the invention is the image forming apparatus according to the first aspect of the invention, wherein an upper guide plate and a lower guide plate are disposed downstream of the cutting unit in the direction of paper conveyance and opposite each other to form part of a conveyance path for the paper between both the upper and lower guide plates, the upper guide plate includes an upper horizontal part and an upper inclined part inclined upstream in the direction of paper conveyance and diagonally upward from the upper horizontal part, the lower guide plate includes a lower horizontal part and a lower inclined part inclined upstream in the direction of paper conveyance and diagonally downward from the lower horizontal part, and a paper insertion opening between the upper and lower guide plates is formed to open in a tapered shape by the upper inclined part and the lower inclined part.

In the fourth aspect of the invention, the paper insertion opening between the pair of guide plates disposed downstream of the cutting unit in the direction of paper conveyance is formed to open in a tapered shape. Therefore, in conveying a piece of paper cut by the cutting unit to the guide plates located downstream in the direction of paper conveyance, the piece of paper can be smoothly transferred without any crease owing to lodging on the guide plates.

A fifth aspect of the invention is the image forming apparatus according to the fourth aspect of the invention, wherein the boundary between the lower horizontal part and the lower inclined part of the lower guide plate is offset downstream in the direction of paper conveyance from the boundary between the upper horizontal part and the upper inclined part of the upper guide plate.

According to the fifth aspect of the invention, since the boundary between the lower horizontal part and the lower inclined part is located downstream in the direction of paper conveyance from the boundary between the upper horizontal part and the upper inclined part, this prevents the chip cut off by the lower cutting blade from entering between the upper guide plate and the lower guide plate and thereby prevents paper clogging.

A sixth aspect of the invention is the image forming apparatus according to the first aspect of the invention, wherein the cutting edge of the lower cutting blade in standby position prior to cutting is tilted at a predetermined angle with respect to the horizontal direction.

According to the sixth aspect of the invention, since the cutting edge of the lower cutting blade in standby position prior to cutting is tilted at a predetermined angle with respect to the horizontal direction, the frequency of chips left on the cutting edge is reduced as compared with the case where the cutting edge of the lower cutting blade in standby position is horizontal. This promotes the chip falling and ensures that the chip is recovered in the chip collecting box.

As described so far, in the image forming apparatus according to the present invention, the upper and lower cutting blades are disposed above and below the paper, respectively, and the paper is cut by moving the lower cutting blade upward with the upper cutting blade fixed. Therefore, even if, upon cutting of a margin of the paper at the rear end of the final one of a plurality of images formed on the paper, the paper chip is left on the cutting edge of the lower cutting blade, it is tilted and slides down according to the downward movement of the lower cutting blade. Thus, the chip can be surely let fall into the chip collecting box disposed below the cutting unit.

Furthermore, the protective member is disposed upstream of the upper cutting blade in the direction of paper conveyance to overlap with the cutting edge of the upper cutting blade when viewed along the direction of paper conveyance. This prevents the printed surface of the paper being conveyed from coming into contact with the cutting edge of the upper cutting blade and thereby avoids the printed surface being slid against the cutting edge and getting scratched, which is advantageous in ensuring the product quality.

### BRIEF DESCRIPTION OF THE DRAWINGS

FIG. 1 is a perspective view showing the appearance of an inkjet printer according to an example embodiment.
FIG. 2 is a perspective view showing the structure of the inkjet printer inside a housing.
FIG. 3 is a plan view showing the structure of the inkjet printer inside the housing.
FIG. 4 is a front view showing the structure of the inkjet printer inside the housing.
FIG. 5 is a schematic diagram of the inkjet printer when viewed from the right of the housing, showing a conveyance path for printing paper.
FIG. 6 is a side view showing the structure of a cutter unit.
FIG. 7 is a front view showing the structure of the cutter unit.
FIG. 8 is a cross-sectional view showing the structure of a drying unit.

### DETAILED DESCRIPTION OF THE INVENTION

An example embodiment will be explained below with reference to the drawings. The following preferred example embodiment is merely illustrative in nature and is not intended to limit the scope, applications and use of the invention.

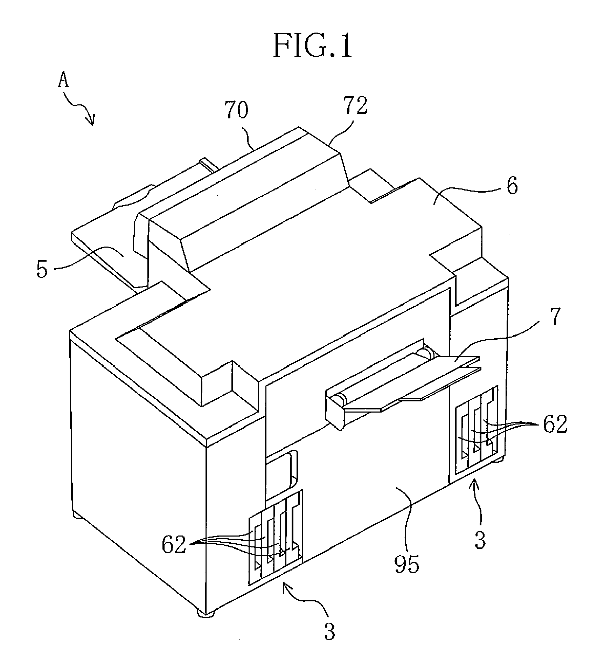

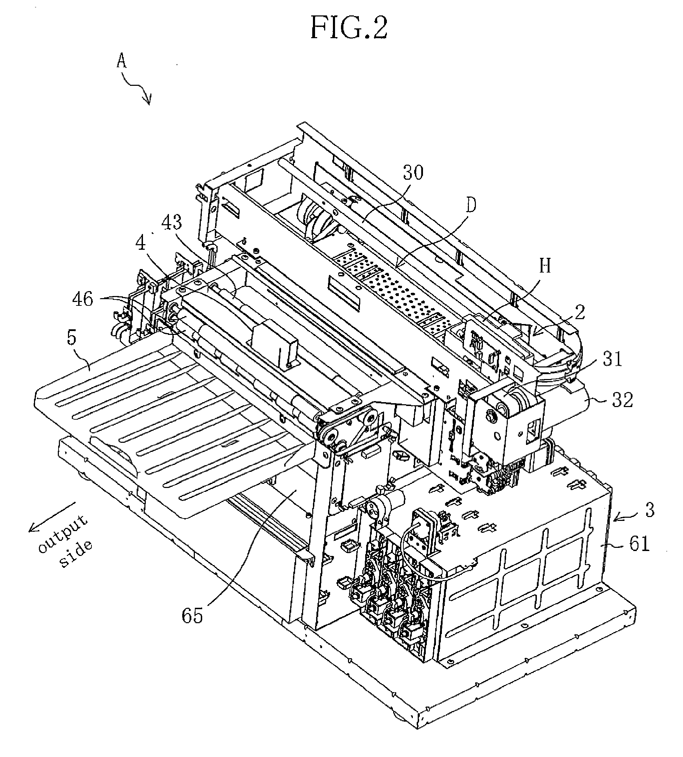

FIG. 1 shows the appearance of an inkjet printer serving as an image forming apparatus according to an example embodiment, and FIGS. 2 to 5 show the internal structure of the inkjet printer. The inkjet printer A is used for a photographic printing system and, for example, used for printing photographic images on printing paper P1 or P2 based on image data transmitted via a communication cable from a reception block for obtaining the image data and correcting it as necessary. More specifically, the inkjet printer A can perform an automatic printing and a manual-feed printing. In the automatic printing, the inkjet printer A pulls out one end of a long roll of printing paper P2 and prints an image on the printing surface of the roll of printing paper P2 (hereinafter, referred to as a paper web P2). In the manual-feed printing, the inkjet printer A prints an image on the printing surface of a sheet of printing paper P1 (hereinafter, referred to as a paper sheet P1) previously cut in a given size.

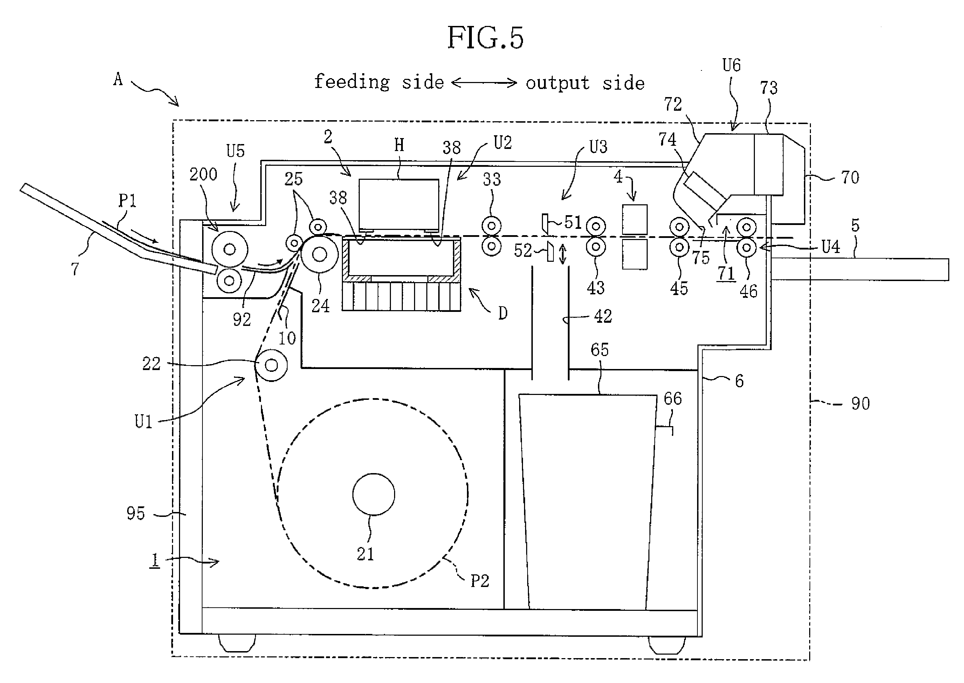

When in the following description the paper sheet P1 and the paper web P2 need not be particularly distinguished, they are referred to as printing paper P1 or P2. Furthermore, the printing surface means the surface on which an image is to be printed. The printing surface of each paper sheet P1 is determined when the paper sheet P1 is set on a manual-feed tray 7 (see FIG. 5). Specifically, the printing surface is the side of the paper sheet P1 facing upward when the paper sheet P1 is set on the manual-feed tray 7. On the other hand, the printing surface of the paper web P2 is the side thereof facing radially outward when the paper web P2 is rolled.

### - GENERAL STRUCTURE -

As shown in FIGS. 1 to 5, the inkjet printer A includes a printer body 90, a manual-feed tray 7 for manually setting a paper sheet P1 thereon and feeding it therefrom into the printer body 90, and a paper output tray 5 for receiving pieces of printing paper P 1 or P2 output from the printer body 90.

The printer body 90 includes: a housing 6; a paper roll containing chamber 1 in a lower part of the interior of the housing 6; a printing part 2 (see FIGS. 2 and 5) in an upper part of the interior of the housing 6 (above the paper roll containing chamber 1); ink storages 3 in the lower part of the interior of the housing 6 and on both sides of the paper roll containing chamber 1; and a roller unit 200 in the upper part of the interior of the housing 6. The paper roll containing chamber 1 contains a paper web P2 rolled with its printing surface outside. The printing part 2 prints, based on image data, an image on the printing surface of the paper sheet P1 fed from the manual-feed tray 7 or the printing surface of the paper web P2 pulled out of the paper roll containing chamber 1. The ink storages 3 store ink to be supplied to the printing part 2. The roller unit 200 is, more specifically, disposed on an upper part of a cover member 95 that is attached to the housing 6 to be freely opened and closed. With the cover member 95 closed, the roller unit 200 conveys and feeds a paper sheet P1 set on the manual-feed tray 7 towards the printing part 2.

Disposed in the upper part of the housing 6 and downstream of the printing part 2 in the direction of paper conveyance are a cutter unit U3 (cutting unit), a back printing unit 4, a drying unit U6 and a paper output unit U4. The cutter unit U3 cuts off an unnecessary part of printed printing paper P1 or P2. The back printing unit 4 prints a serial number on the back side of each piece of printing paper P1 or P2. The drying unit U6 dries the piece of printing paper P1 or P2 printed in the printing part 2. The paper output unit U4 conveys the printed piece of printing paper P1 or P2 further downstream. Disposed downstream of the paper output unit U4 in the direction of paper conveyance is the paper output tray 5 extending outside from a paper output port in the housing 6. The paper output tray 5 receives pieces of printing paper P1 or P2 delivered by an output roller 46 described below.

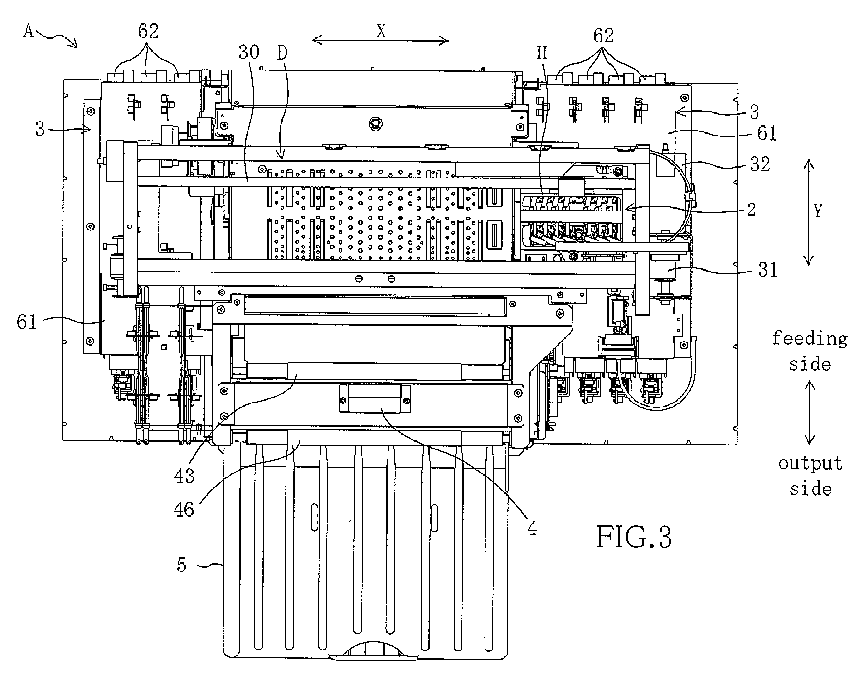

In this example embodiment, the side of the housing 6 towards the paper output tray 5 ("output side" shown in FIG. 3) is referred to as the housing rear side, the side thereof opposite to the paper output tray 5 ("feeding side" shown in FIG. 3) is referred to as the housing front side, the left side thereof as viewed from the housing front side is referred to as the housing left side, and the right side thereof as viewed from the housing front side is referred to as the housing right side. Therefore, the right-to-left direction in FIG. 5 is the housing front-to-rear direction and the direction orthogonal to the drawing sheet of FIG. 5 is the housing right-to-left direction. The housing right-to-left direction coincides with the width direction of the paper sheet P1 set on and fed from the manual-feed tray 7 and the width direction of the paper web P2 contained in and fed from the paper roll containing chamber 1.

### - PAPER CONVEYANCE MECHANISM -

As shown in FIG. 5, the inkjet printer A is provided with a paper conveyance mechanism for pulling the leading edge of a paper web P2 out of the paper roll containing chamber 1 and conveying it along a given conveyance path. To form the conveyance path, the paper conveyance mechanism includes, in order from the feed unit U1 for feeding a paper web P2, the feed unit U1, a printing unit U2, a cutter unit U3, the drying unit U6 and the paper output unit U4. Thus, image data is printed on the printing surface of the printing paper P1 or P2 located on the conveyance path in the printing unit U2 provided in the printing part 2.

In this example embodiment, for another paper feed path other than the feed path of a paper web P2 from the feed unit U1 to the printing unit U2, the paper conveyance mechanism further includes a manual-feed unit U5 configured to pull in a paper sheet P1 from the manual-feed tray 7 and feed it to the printing part 2.

In printing on a paper web P2, the paper conveyance mechanism feeds, through the feed unit U1, the paper web P2 set in the paper roll containing chamber 1 to the printing unit U2. Then, the printing unit U2 prints image data on the fed paper web P2 with the print head H while conveying the paper web P2. Thereafter, the paper conveyance mechanism coveys the printed paper web P2 to the cutter unit U3, the cutter unit U3 cuts the paper web P2 to a given print size, the drying unit U6 then dries the cut piece of paper web P2, and the paper output unit U4 conveys the cut piece of paper web P2 out to the paper output tray 5. Hereinafter, the upstream side and downstream side in the direction of conveyance of the paper web P2 being conveyed during printing is referred to simply as the upstream side and downstream side, respectively.

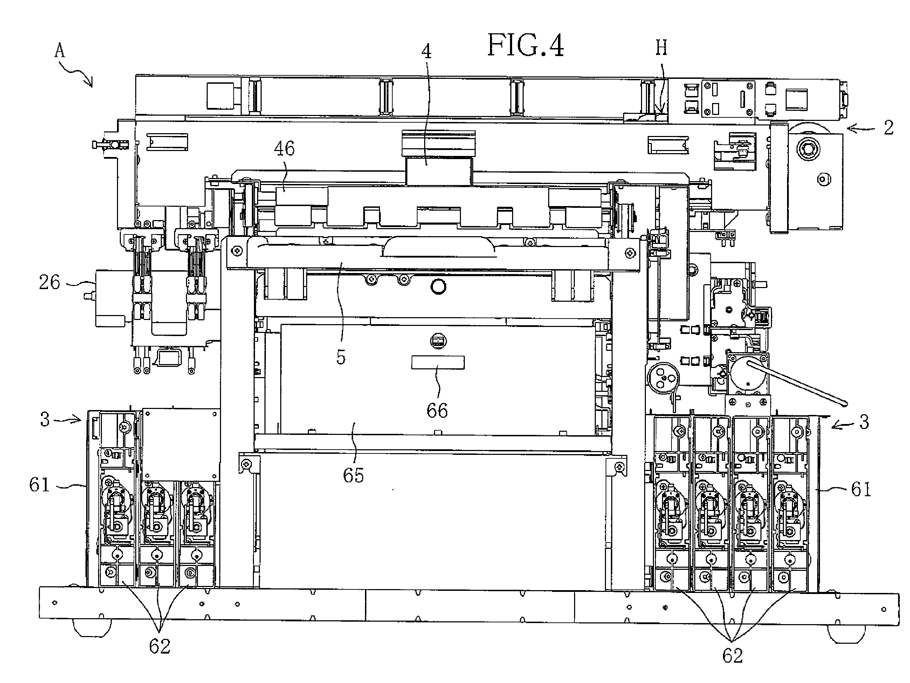

The feed unit U1 includes a core roller 21, a transverse restriction roller 22, a conveyance drive roller 24 capable of being driven into rotation by an electric motor 26 (see FIG. 4), and two pinch rollers 25 disposed opposite to the conveyance drive roller 24. The core roller 21 is used to wind a paper web P2 in a roll thereon so that the paper web P2 can be contained in the paper roll containing chamber 1. The transverse restriction roller 22 restricts the transverse position of the paper web P2 pulled out of the core roller 21. The conveyance drive roller 24 conveys the paper web P2 with its rotation. The two pinch rollers 25 are engageable against the conveyance drive roller 24 to pinch the paper web P2 together with the conveyance drive roller 24.

The feed unit U1 is configured to pull the paper web P2 out of the paper roll containing chamber 1 and also feed it to the printing part 2 by the rotation of the conveyance drive roller 24.

The conveyance drive roller 24 can be rotated forward by the electric motor 26 to pull the paper web P2 out of the paper roll containing chamber 1 and feed it to the printing part 2 and rotated backward by the electric motor 26 to return the paper web P2 to the paper roll containing chamber 1.

Thus, the inkjet printer A can cut off the printed part of the paper web P2 into a given size by the cutter unit U3 downstream of the printing part 2, then return the remaining paper web P2 after the cutting upstream and restart printing with the leading edge of the remaining paper web P2. Alternatively, the inkjet printer A can return the paper web P2 after the cutting into the paper roll containing chamber 1, feed a cut paper sheet P1 to the printing part 2 through the manual-feed unit U5 and print on it. Furthermore, in replacing the paper web P2 with new one, part of the paper web P2 pulled out of the paper roll containing chamber 1 can be returned into the paper roll containing chamber 1.

The printing unit U2 includes: the print head H for ejecting ink to the printing paper P1 or P2 and forming an image on it; a paper holder D for holding by suction the printing paper P1 or P2 at a position allowing printing of the print head H; and a pair of paper conveyance rollers 33 disposed downstream of the paper holder D and engaged against each other. The conveyance drive roller 24 and the pinch rollers 25 in the feed unit U1 are used also as components of the printing unit U2 and act to convey the printing paper P1 or P2 in the printing unit U2.

The print head H is configured to be movable along a rail 30 extending in a main scanning direction X (see FIG. 3) coinciding with the width direction of the printing paper P1 or P2 (i.e., the housing right-to-left direction). Specifically, when the rotational force of a drive motor 32 is transmitted through a pulley to a drive belt 31, the print head H moves in the main scanning direction X according to the amount of rotation of the drive belt 31.

The print head H further includes two head units 38 and 38 (see FIG. 5) arranged along a sub-scanning direction Y (see FIG. 3) orthogonal to the main scanning direction X and coinciding with the direction of travel of the printing paper P1 or P2 (i.e., the housing front-to-rear direction). The print head H is configured to print a given image or characters on the printing paper P1 or P2 by ejecting ink through ink-jet nozzles (not shown) formed in these two head units 38 and 38.

The ink storages 3 include their respective box-shaped cases 61 (see FIG. 4) disposed on the right and left of the inkjet printer A. These cases 61 contain seven removable ink cartridges in total (in FIG. 4, three in the left case 61 and four in the right case 61). The ink cartridges 62 are charged with different types of ink having different hues. Therefore, the ink cartridges 62 spent or being used can be replaced with new ones by removing them from the cases 61 and setting new ones in the cases 61. Seven types of ink charged in these ink cartridges 62 are yellow (Y), magenta (M), cyan (C), black (K), red (R), violet (V) and clear (CL).

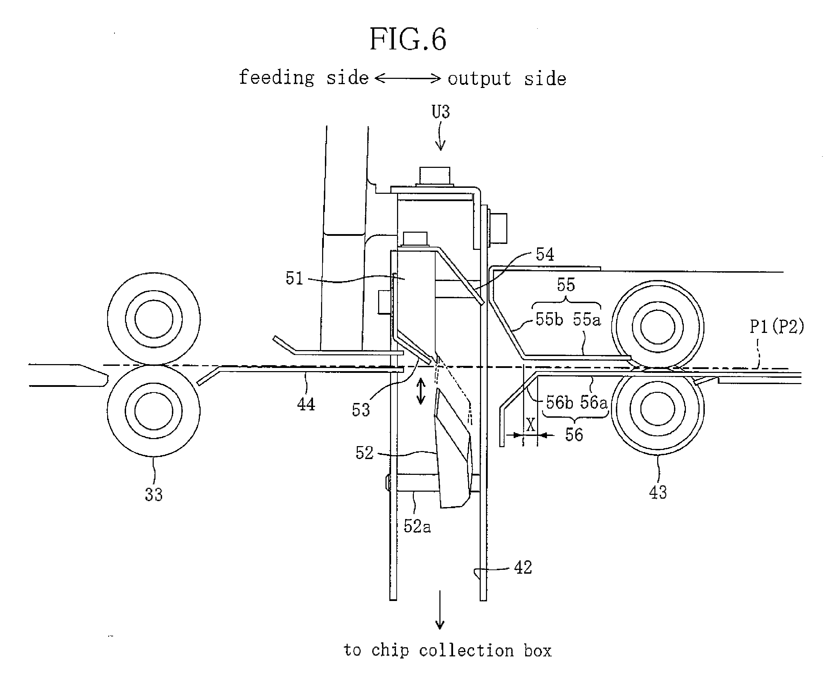

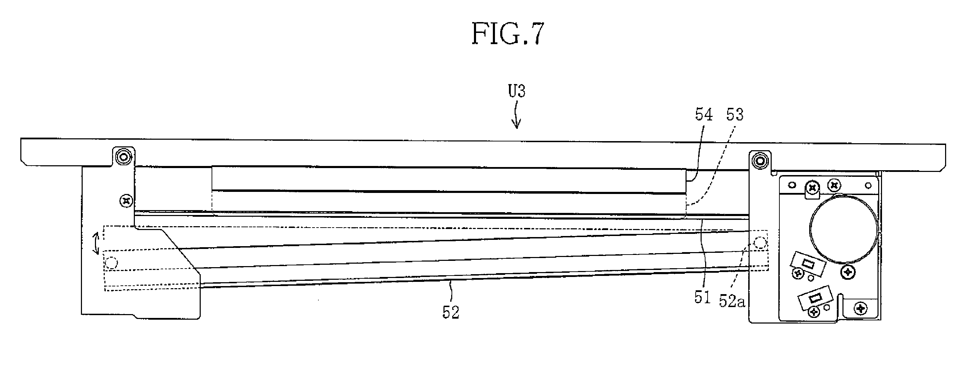

Next, a description is given of the structure of the cutter unit U3, which is a feature of the present invention, with reference to FIGS 6 and 7. As shown in FIGS. 6 and 7, the cutter unit U3 includes an upper cutting blade 51 and a lower cutting blade 52 that are disposed above and below the printing paper P1 or P2, respectively. The cutter unit U3 cuts the printing paper P1 or P2 to size (length) by moving the lower cutting blade 52 upward with the upper cutting blade 51 fixed. Specifically, the lower cutting blade 52 is pivotally moved about its pivot shaft 52a clockwise in FIG. 7 to move itself up to a cutting position and pivotally moved about the pivot shaft 52a counterclockwise in FIG. 7 to move itself down to a standby position.

The cutting edge of the upper cutting blade 51 is positioned close to the printed surface of the printing paper P1 or P2 and constitutes a stop that, upon cutting of the printing paper P1 or P2, stops the printing paper P1 or P2 from being lifted up by the lower cutting blade 52.

If in this manner the printing paper P1 or P2 is cut by moving the lower cutting blade 52 upward with the upper cutting blade 51 fixed, it can be avoided that when a margin of the printing paper P1 or P2 at the rear end of the final one of a plurality of images formed on the printing paper P1 or P2 is cut off, the paper chip is left on the conveyance path.

Specifically, if the printing paper P1 or P2 is cut by moving the upper cutting blade 51 downward with the lower cutting blade 52 fixed, a paper chip may rest at one end on a guide plate 44 disposed at a point on the paper conveyance path located upstream of the cutter unit U3 in the direction of paper conveyance and at the other end on the cutting edge of the lower cutting blade 52. Thereby, the paper chip is left on the conveyance path without being recovered in the chip collecting box 65.

In contrast, in this example embodiment, since the lower cutting blade 52 is moved up and down, a paper chip resting on top of the cutting edge of the lower cutting blade 52 is tilted and slides down according to the downward movement of the lower cutting blade 52. Therefore, the chip can be surely let fall into the chip collecting box 65 disposed below the cutter unit U3.

Furthermore, as shown in FIG. 7, the cutting edge of the lower cutting blade 52 in standby position prior to cutting is tilted at a predetermined angle with respect to the horizontal direction. Thus, a paper chip resting on the cutting edge of the lower cutting blade 52 easily slides down and the frequency of chips left on the cutting edge is reduced as compared with the case where the cutting edge of the lower cutting blade in standby position is horizontal. This promotes the chip falling.

Furthermore, the cutting edge of the upper cutting blade 51 is positioned close to the printed surface of the printing paper P1 or P2. Thus, even if, upon cutting of the printing paper P1 or P2 by moving the lower cutting blade 52 upward, the printing paper P1 or P2 is lifted up with the movement of the lower cutting blade 52, the upper cutting blade 51 can stop further upward movement of the printing paper P1 or P2. Therefore, the printing paper P1 or P2 can be smoothly cut.

The upper cutting blade 51 is disposed upstream of the lower cutting blade 52 in the direction of paper conveyance. Disposed upstream of the upper cutting blade 51 in the direction of paper conveyance is a protective member 53 that overlaps with the cutting edge of the upper cutting blade 51 when viewed along the direction of conveyance of the printing paper P1 or P2.

The protective member 53 is composed of a protective plate that covers an outside surface of the upper cutting blade 51 located on the upstream side thereof in the direction of paper conveyance. The protective member 53 prevents the printed surface of the printing paper P1 or P2 being conveyed from coming into contact with the cutting edge of the upper cutting blade 51. Thus, for example, even if the printing paper P1 or P2 is curled upward, it can be avoided that the printed surface of the printing paper P1 or P2 being conveyed is slid against the cutting edge of the upper cutting blade 51 and thereby gets scratched. This is advantageous in ensuring the product quality.

Disposed above the lower cutting blade 52 is a closure member 54 that, upon cutting of the printing paper P1 or P2, prevents flying-off of the chip thrust upward by the lower cutting blade 52. The closure member 54 is composed of a closure plate covering the lower cutting blade 52 from above. Thus, a chip flew off by upward thrust of the lower cutting blade 52 hits the closure member 54 and falls. This prevents the chip flying off upward from being irrecoverable and clogging the conveyance path.

Disposed downstream of the cutter unit U3 in the direction of paper conveyance are an upper guide plate 55 and a lower guide plate 56. The upper and lower guide plates 55 and 56 are disposed opposite to each other to form part of the conveyance path for the printing paper P1 or P2 between them.

The upper guide plate 55 includes an upper horizontal part 55a and an upper inclined part 55b inclined to bend, from the upstream end of the upper horizontal part 55a, upstream in the direction of paper conveyance and diagonally upward. The lower guide plate 56 includes a lower horizontal part 56a and a lower inclined part 56b inclined to bend, from the upstream end of the lower horizontal part 56a, upstream in the direction of paper conveyance and diagonally downward.

Thus, a paper insertion opening on the conveyance path formed between the upper guide plate 55 and the lower guide plate 56 opens in a tapered shape by the inclinations of the upper inclined part 55b and the lower inclined part 56b. Therefore, when a piece of printing paper P1 or P2 cut by the cutter unit U3 is conveyed to part of the conveyance path located downstream of the cutter unit U3 in the direction of paper conveyance and between the upper guide plate 55 and the lower guide plate 56, the piece of printing paper P1 or P2 can be smoothly transferred without any crease owing to lodging on the conveyance path.

Furthermore, the boundary between the lower horizontal part 56a and the lower inclined part 56b of the lower guide plate 56 is offset downstream in the direction of paper conveyance from the boundary between the upper horizontal part 55a and the upper inclined part 55b of the upper guide plate 55 by a distance X. Thus, even if a paper chip cut off by the lower cutting blade 52 flies off, the chip can be prevented from entering the conveyance path between the upper guide plate 55 and the lower guide plate 56. This prevents paper clogging.

This example embodiment describes a configuration in which the lower cutting blade 52 is movable and a closure member 54 is disposed above the lower cutting blade 52, whereby a paper chip can be prevented from being left on the cutting edge of the lower cutting blade 52. However, the present invention is not limited to the above configuration including the closure member 54 and, for example, may be configured to provide an air blowing unit that allows a paper chip left on the cutting edge of the lower cutting blade 52 to fall by forcibly blowing air or the like onto the chip.

Disposed below the cutter unit U3 is a collection path 42 for collecting therethrough chips of the printing paper P1 or P2 formed by cutting it. The chips having fallen through the collection path 42 are collected in a chip collecting box 65 disposed at the lower end of the collection path 42. The chip collecting box 65 is configured so that the operator can slide it out rearward of the housing 6 by pulling its handle 66 and take out the chips collected in it.

The piece of printing paper P1 or P2 cut by the cutter unit U3 is conveyed to the paper output unit U4 by a pair of conveyance rollers 43 engaged against each other. The back printing unit 4 is disposed between the cutter unit U3 and the paper output unit U4. In the back printing unit 4, a serial number or the like is printed on the back (underside) of the printing paper P1 or P2 passing through it.

The paper output unit U4 includes two pairs of output rollers 45 and 46 for conveying the piece of printing paper P1 or P2 and delivering it to the paper output tray 5.

The conveyance rollers 43 and the output rollers 45 and 46 are configured to be synchronously driven into rotation by an unshown electric motor.

Furthermore, each pair of conveyance rollers 43 and output rollers 45 and 46 are configured to be disengaged one from the other before the leading edge of the printing paper P1 or P2 conveyed by the upstream conveyance drive roller 24 and print conveyance rollers 33 is pinched between the pair.

Specifically, when the printing paper P1 or P2 is conveyed from the conveyance drive roller 24 and the print conveyance rollers 33 towards the pair of conveyance rollers 43, the upper conveyance roller moves up and disengages from the lower conveyance roller before the leading edge of the printing paper P1 or P2 contacts the pair of conveyance rollers 43. Likewise, when the printing paper P1 or P2 having passed through the conveyance rollers 43 is conveyed towards each of the two pairs of output rollers 45 and 46, the upper roller of each pair of output rollers 45 and 46 moves up and disengages from the lower roller before the leading edge of the printing paper P1 or P2 contacts the pair of output rollers. This eliminates inconveniences, such as creases of the printing paper P1 or P2 formed owing to its leading edge lodging on the conveyance rollers 43 and the output rollers 45 and 46.

Furthermore, after the printing of an image in the print unit U2 and before the cutting of the printing paper P1 or P2 in the cutter unit U3, the upper rollers of the pair of conveyance rollers 43 and the pairs of output rollers 45 and 46, which have been moved up, are concurrently returned to their positions of engagement against the lower rollers, thereby pinching the printing paper P1 or P2. This prevents the printing paper P1 or P2 from being displaced when being cut, which ensures accurate paper cutting.

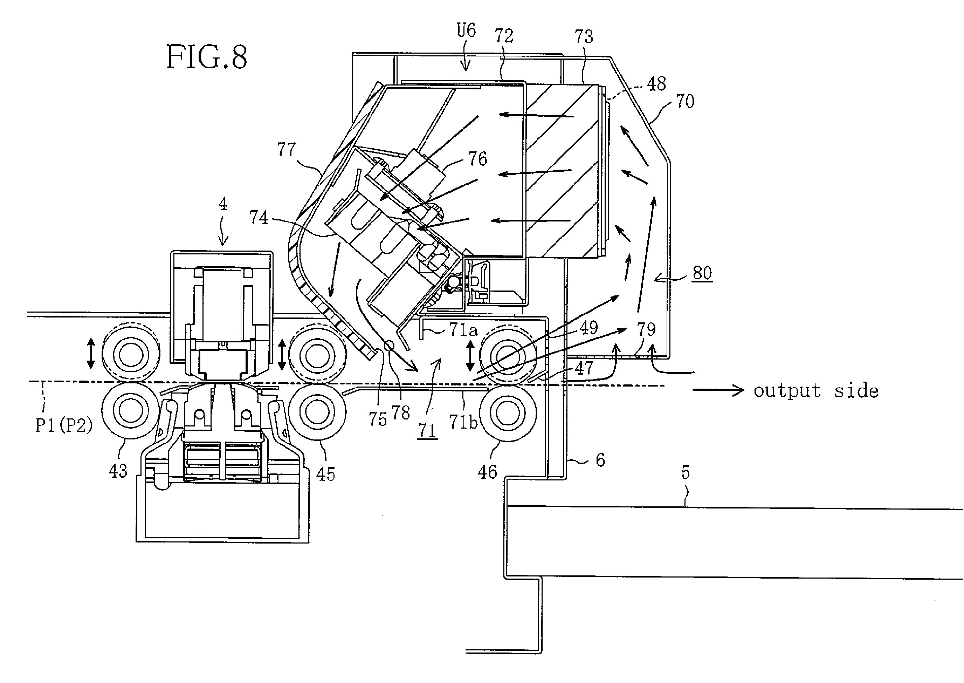

The drying unit U6 is, as shown in FIG. 8, disposed between two pairs of engageable rollers in the paper output unit U4, i.e., between the pair of upstream output rollers 45 and the pair of downstream output rollers 46. The drying unit U6 sucks air into the housing 6 through an air inlet 48 formed in the housing 6 above and in the vicinity of the paper output port, applies heat to the sucked air, blows out the air as dry air, and exhausts, through an air outlet 49 to the outside of the housing 6, the dry air blown onto the printing paper P1 or P2.

The drying unit U6 includes a drying chamber 71 disposed on the conveyance path of the printing paper P1 or P2, a dryer 72 for supplying dry air to the drying chamber 71, and an outside cover 70 for introducing to the air inlet 48 the dry air exhausted through the air outlet 49. The drying chamber 71 is defined by an upper partition wall 71a and a lower partition wall 71b that are disposed opposite each other with the printing paper P1 or P2 therebetween, and constitutes a retention space for retaining dry air blown onto the printing paper P1 or P2 from the dryer 72.

The dryer 72 includes a plurality of intake fans 73 disposed in the housing 6 at laterally spaced intervals, a heater 74, an exhaust nozzle 75 disposed at the lower end of the dryer 72 and opening downstream in the direction of paper conveyance, a safety thermostat 76, and a thermo sensor 78 disposed downstream of and near to the exhaust nozzle 75. The intake fans 73 take air from the outside through the air inlet 48 in the housing 6 into the dryer 72. The heater 74 heats the air taken in by the intake fans 73. The exhaust nozzle 75 blows the dry air heated by the heater 74 therethrough downstream in the direction of paper conveyance. The safety thermostat 76 detects the internal temperature of the dryer 72 and stops the heater 74 in time of necessity. The thermo sensor 78 measures the temperature of the dry air. Furthermore, a heat insulating material 77 is attached to an upstream portion of the body outer wall of the dryer 72 in the direction of paper conveyance, also including the exhaust nozzle 75. The provision of such a heat insulating material 77 restrains heat radiated by the dryer 72 from being transmitted to the heat-vulnerable units disposed upstream of the dryer 72 in the direction of paper conveyance, such as the back printing unit 4 using an ink ribbon.

The outside cover 70 is disposed above the paper output port 47 in the housing 6 and configured to cover the air inlet 48 and air outlet 49 in the housing 6, allow the dry air exhausted through the air outlet 49 to flow through a flow space 80 located in the outside cover 70 and then introduce the dry air to the air inlet 48. Furthermore, the under surface of the outside cover 70, i.e., the surface thereof facing the piece of printing paper P1 or P2 output through the paper output port 47, has an outside air inlet 79 for taking therethrough the air outside of the outside cover 70 into the flow space 80.

The drying unit U6 is configured to blow dry air onto the printed piece of printing paper P1 or P2 and downstream in the direction of paper conveyance, then let part of the dry air out through the output port 47 in the housing 6 to the outside of the housing 6 and let the remaining part of the dry air out through the air outlet 49 into the flow space 80 in the outside cover 70. Furthermore, part of the dry air let out through the output port 47 in the housing 6 to the outside of the housing 6 and the air outside of the outside cover 70 are taken through the outside air inlet 79 in the outside cover 70 into the flow space 80.

Then, the dry air exhausted through the air outlet 49, the air taken in through the outside air inlet 79 and the dry air let out through the output port 47 and taken in through the outside air inlet 79 are mixed in the flow space 80. The mixed air is taken through the air inlet 48 into the dryer 72 by the intake fan 73, heated by the heater 74 and then blown as dry air onto the printing paper P1 or P2.

Since such a drying unit U6 is provided, the blow of dry air promotes the drying of ink ejected from the print head H to the printing paper P1 or P2 even if the ink on the printed piece of paper is not yet dried.

As described above, in the inkjet printer A serving as an image forming apparatus according to this example embodiment, the upper cutting blade 51 and the lower cutting blade 52 are disposed above and below the printing paper P1 or P2, respectively, and the printing paper P1 or P2 is cut by moving the lower cutting blade 52 upward with the upper cutting blade 51 fixed. Therefore, even if, upon cutting of a margin of the printing paper P1 or P2 at the rear end of the final one of a plurality of images formed on the printing paper P1 or P2, the chip is left on the cutting edge of the lower cutting blade 52, it is tilted and slides down according to the downward movement of the lower cutting blade 52. Thus, the chip can be surely let fall into the chip collecting box 65 disposed below the cutter unit U3.

Furthermore, the protective member 53 is disposed upstream of the upper cutting blade 51 in the direction of paper conveyance to overlap with the cutting edge of the upper cutting blade 51 when viewed along the direction of conveyance of the printing paper P1 or P2. This prevents the printed surface of the printing paper P1 or P2 being conveyed from coming into contact with the cutting edge of the upper cutting blade 51 and thereby avoids the printed surface being slid against the cutting edge and getting scratched, which is advantageous in ensuring the product quality.

As seen from the above description, the present invention has the following highly practical effects: that an image forming apparatus including a cutter unit with a pair of upper and lower cutting blades can cut off a paper margin at the rear end of the final one of a plurality of images formed on the paper and surely recover it in a chip collecting box, and also can prevent a printed surface of the paper being conveyed from coming into contact with the upper cutting blade and thereby getting scratched. Therefore, the present invention is very useful and has high industrial applicability.

## Claims

1. An image forming apparatus for forming images on a long piece of paper (P1, P2) while conveying the paper (P1, P2) in a predetermined direction of paper conveyance, cutting the paper (P1, P2) having the images formed thereon to a given length and conveying the paper (P1, P2) to a predetermined point, the image forming apparatus comprising:
a cutting unit (U3) including an upper cutting blade (51) and a lower cutting blade (52) that are disposed above and below the paper (P1, P2), respectively, the cutting unit (U3) being configured to cut the paper (P1, P2) by moving the lower cutting blade (52) upward with the upper cutting blade (51) fixed; and
a protective member (53) disposed upstream of the upper cutting blade (51) in the direction of paper conveyance to overlap with the cutting edge of the upper cutting blade (51) when viewed along the direction of paper conveyance, the protective member (53) being configured to prevent the printed surface of the paper (P1, P2) being conveyed from coming into contact with the cutting edge of the upper cutting blade (51).

2. The image forming apparatus of claim 1, wherein a closure member (54) is disposed above the lower cutting blade (52) and configured to prevent flying-off of a paper chip thrust upward by the lower cutting blade (52) upon cutting of the paper (P1, P2).

3. The image forming apparatus of claim 1, wherein the cutting edge of the upper cutting blade (51) is positioned close to the printed surface of the paper (P1, P2) and constitutes a stop for stopping the paper (P1, P2) from being lifted up by the lower cutting blade (52) upon cutting of the paper (P1, P2).

4. The image forming apparatus of claim 1, wherein
an upper guide plate (55) and a lower guide plate (56) are disposed downstream of the cutting unit (U3) in the direction of paper conveyance and opposite each other to form part of a conveyance path for the paper (P1, P2) between both the upper and lower guide plates (55, 56),
the upper guide plate (55) includes an upper horizontal part (55a) and an upper inclined part (55b) inclined upstream in the direction of paper conveyance and diagonally upward from the upper horizontal part (55a),
the lower guide plate (56) includes a lower horizontal part (56a) and a lower inclined part (56b) inclined upstream in the direction of paper conveyance and diagonally downward from the lower horizontal part (56a), and
a paper insertion opening between the upper and lower guide plates (55, 56) is formed to open in a tapered shape by the upper inclined part (55b) and the lower inclined part (56b).

5. The image forming apparatus of claim 4, wherein the boundary between the lower horizontal part (56a) and the lower inclined part (56b) of the lower guide plate (56) is offset downstream in the direction of paper conveyance from the boundary between the upper horizontal part (55a) and the upper inclined part (55b) of the upper guide plate (55).

6. The image forming apparatus of claim 1, wherein the cutting edge of the lower cutting blade (52) in standby position prior to cutting is tilted at a predetermined angle with respect to the horizontal direction.
